# EUROPÄISCHE PATENTANMELDUNG

(11) **EP 3 557 760 A1**
(43) Veröffentlichungstag der Anmeldung: **23.10.2019**
(21) Anmeldenummer: 18168213.9
(22) Anmeldetag: 19.04.2018
(51) Int. Cl.: H02P 29/024, H02P 1/04

(54) **VERFAHREN ZUR ÜBERWACHUNG EINER ANLAUFZEIT EINES ELEKTROMOTORS**

(71) Anmelder: Siemens Aktiengesellschaft, 80333 München (DE)
(72) Erfinder: Spindler, Konrad, 92289 Ursensollen (DE); Fröhlich, Erich, 90579 Langenzenn (DE); Zitzler, Stefan, 92421 Schwandorf (DE)

(57) **Zusammenfassung**

Die Erfindung betrifft ein Verfahren zur Überwachung einer Anlaufzeit (tA) eines Elektromotors (5) durch ein dem Elektromotor (5) vorgeschaltetes Motorsteuergerät (10). Das Verfahren umfasst folgende Schritte:
- Erfassen eines Startzeitpunkts (t01, t02, t03), an dem der Elektromotor einen Anlauf (A1, A2, A3) beginnt;
- Erfassen eines Endzeitpunkts (tE1, tE2, tE3), an dem der Elektromotor den Anlauf (A1, A2, A3) abgeschlossen hat;
- Ermitteln einer Anlaufzeit (tA, tA1, tA2, tA3) aus dem Startzeitpunkt (t01, t02, t03) und dem Endzeitpunkt (tE1, tE2, tE3);
- Vergleichen der Anlaufzeit (tA, tA1, tA2, tA3) mit mindestens einem vorgegebenen zeitlichen Grenzwert (L1, L2, L11, L21, L31, L12, L22, L32); und
- Ausgeben einer Meldung (56) in Abhängigkeit des Ergebnisses des Vergleichs.

## Beschreibung

Die vorliegende Erfindung betrifft ein Verfahren zur Überwachung einer Anlaufzeit eines Elektromotors und ein Motorsteuergerät zur Ausführung des Verfahrens.

EP2192685A1 (Siemens AG) 07.05.2009 beschreibt ein elektronisches Motorsteuergerät zur Ansteuerung eines Asynchronmotors. In dem Motorsteuergerät ist ein Anlaufzeitsollwert einer Anlaufzeit des Asynchronmotors hinterlegt. Das Motorsteuergerät weist außerdem einen Regler zum Regeln der Anlaufzeit auf Basis einer Anlaufzeitdifferenz einer letzten erreichten Anlaufzeit zu dem Anlaufzeitsollwert auf.

Aufgabe der vorliegenden Erfindung ist es, ein verbessertes Condition Monitoring einer elektromotorisch betriebenen Anlage anzugeben.

Diese Aufgabe wird erfindungsgemäß durch ein Verfahren mit den in Anspruch 1 angegebenen Merkmalen gelöst.

Das erfindungsgemäße Verfahren dient einer Überwachung einer Anlaufzeit eines Elektromotors, z. B. eines Asynchronmotors, durch ein dem Elektromotor vorgeschaltetes Motorsteuergerät. Das Verfahren umfasst ein Erfassen eines Startzeitpunkts, an dem der Elektromotor einen Anlauf beginnt. Das Verfahren umfasst außerdem ein Erfassen eines Endzeitpunkts, an dem der Elektromotor den Anlauf abgeschlossen hat. Das Verfahren umfasst darüber hinaus ein Ermitteln einer Anlaufzeit aus dem Start- und dem Endzeitpunkt. Das Verfahren umfasst außerdem ein Vergleichen der Anlaufzeit mit mindestens einem vorgegebenen zeitlichen Grenzwert. Und das Verfahren umfasst ein Generieren und Ausgeben einer Meldung in Abhängigkeit des Ergebnisses des Vergleichs.

Der Begriff "vorgeschaltet" bedeutet, dass das Motorsteuergerät eine Steuerfunktion in der elektrischen Zuleitung zu dem Elektromotor aufweist, d. h. die dem Elektromotor zufließende elektrische Antriebsenergie steuern kann. Das Motorsteuergerät dient also einer Ansteuerung des Elektromotors.

Die Anlaufzeit ist die nach dem Einschalten des Elektromotors verstreichende Zeit während des Anlaufs des Elektromotors vom Stillstand, d. h. Drehzahl von 0 U/min, bis zum Erreichen einer Nenndrehzahl, z. B. von 1500 U/min oder von 3000 U/min. Als Nenndrehzahl des Elektromotors kann die Drehzahl definiert sein, bei der der Elektromotor bei Volllast die größte mögliche Leistung, die sogenannte Nennleistung, abgibt.

Die Anlaufzeit kann beispielsweise bei elektronischen Motorsteuergeräten, welche eine Stromerfassung in mindestens einer Phase aufweisen, über den zeitlichen Stromverlauf in der mindestens einer Phase ermittelt werden. Das Einsetzen des Stromflusses nach einem Einschalten des Elektromotors kann als der Beginn der Anlaufphase, d. h. als der Startzeitpunkt, erkannt werden. Aus dem Stromverlauf über die Zeit, z. B. aus einer Stromabsenkung, die sich nach dem Erreichen der Nenndrehzahl beim Überschreiten des "Kipppunkts" auf der Stromortskurve ergibt, kann das Ende der Anlaufphase, d. h. der Endzeitpunkt, erkannt werden.

Ein Erreichen der Nenndrehzahl kann auch an einer signifikanten Absenkung der Phasenverschiebung φ zwischen Strom und Spannung oder an einer Stromabsenkung erkannt werden.

Prinzipiell sind auch andere Verfahren zur Ermittlung der Anlaufzeit eines Elektromotors möglich. Bei Motorsteuergeräten mit Bypasskontakten werden nach der Anlaufphase die Bypasskontakte geschlossen und somit die Thyristoren überbrückt. Dieser Zeitpunkt kann ebenso das Ende der Anlaufzeit darstellen.

Das Verfahren umfasst ein Generieren einer Meldung in Abhängigkeit des Ergebnisses des Vergleichs. Falls der Vergleich der Anlaufzeit mit mindestens einem vorgegebenen zeitlichen Grenzwert ergibt, dass die Anlaufzeit einen unteren Grenzwert unterschritten hat oder die Anlaufzeit einen oberen Grenzwert überschritten hat, so erfolgt ein Generieren und eine Ausgabe einer Meldung, durch welche ein Anwender oder Betreiber des Motorsteuergeräts über diese Grenzwertverletzung, d. h. das Über- bzw. Unterschreiten eines Grenzwertes, informiert wird.

Ein unterer zeitlicher Grenzwert ist ein Grenzwert, dessen Unterschreitung durch die ermittelte Anlaufzeit zu einer Meldung führt. Ein oberer Grenzwert ist ein Grenzwert, dessen Überschreitung durch die ermittelte Anlaufzeit zu einer Meldung führt.

Es kann eine beliebige Anzahl von Grenzwerten definiert werden. Es kann eine beliebige Anzahl von unteren Grenzwerten definiert werden. Es kann eine beliebige Anzahl von oberen Grenzwerten definiert werden. Es kann auch eine beliebige Anzahl von unteren Grenzwerten mit einer beliebige Anzahl von oberen Grenzwerten kombiniert werden.

Der Erfindung liegt die Erkenntnis zugrunde, dass vor allem bei zeitkritischen Applikationen, z. B. einem Transport eines Transportguts über mehrere Förderbänder mit dazwischen angeordneten Übergabestellen zwischen den Förderbändern, die Anlaufzeit eine entscheidende Größe für einen zuverlässigen Betrieb der Applikation ist. Normalerweise sind in einem eingeschwungenen Zustand bei einer Applikation, z. B. einem Förderband, einer einen Tank vor einem Überlauf schützenden Pumpe, einem Lüfter, die Anlaufzeiten des die Applikation antreibenden Elektromotors relativ konstant. Kommt es nun durch eine Veränderung in der Applikation, z. B. durch eine Verschmutzung eines Lagers des Förderbands, durch eine Verstopfung einer Pumpe, durch eine Abnutzung eines Antriebsriemens oder durch ein Abbrechen eines Lüfterflügels, zu einer signifikanten Laständerung am Elektromotor, so weicht die Anlaufzeit des antreibenden Elektromotors von den bisherigen Anlaufzeiten ab. Auch Änderungen von Umgebungsvariablen, z. B. von Temperatur, können bei einem Motorsteuergerät zu geänderten Anlaufzeiten des angesteuerten Elektromotors führen. Diese Abweichung der Anlaufzeit wird einem Betreiber der Applikation gemeldet, dem diese Abweichung als eine Information über einen geänderten und/oder sich ändernden Zustand seiner Applikation dient.

Die erfindungsgemäße Anlaufzeitüberwachungsfunktion dient, wie eine Betriebsstromüberwachungsfunktion, zur Lastüberwachung einer elektromotorisch betriebenen Applikation, da die Anlaufzeit bei einer Überschreitung Rückschlüsse auf eine Überlastung der Applikation, z. B. vom einem Förderband, und bei einer Unterschreitung auf eine Unterlastung der Applikation zulässt.

Zusammenfassend ist festzuhalten, dass die Erfindung ein Condition Monitoring einer elektromotorisch betriebenen Anlage unterstützt.

Die Erfindung bietet den Vorteil, dass die Anlaufzeit eines Elektromotors einen Rückschluss auf eine vom Elektromotor angetriebene Applikation erlaubt. Eine Änderung der Anlaufzeit kann einem Betreiber der Applikation gemeldet werden, dem diese Abweichung als eine Information über einen geänderten und/oder sich ändernden Zustand seiner Applikation dient. Somit kann die Abweichung der Anlaufzeit im Rahmen eines Condition Monitoring genutzt werden.

Die Erfindung bietet noch eine Reihe von weiteren Vorteilen. Die Erfindung führt zu geringeren Applikationskosten, da die Funktion zur Überwachung der Anlaufzeit in das Motorsteuergerät integriert ist und somit auf externe, diskret aufgebaute Vorrichtungen zur Überwachung der Anlaufzeit verzichtet werden kann. Die Erfindung führt, da die Funktion zur Überwachung der Anlaufzeit in das Motorsteuergerät integriert ist, zu einer Reduzierung des Verdrahtungsaufwands und somit zu einer Vereinfachung der Applikation. Die Erfindung basiert auf einer Einbindung der Überwachungsfunktion in ein Diagnosekonzept des Motorsteuergeräts. Die Erfindung basiert auf dem gleichen Funktionskonzept wie bereits bekannte, vorzugsweise in das Motorsteuergerät integrierte Überwachungsfunktionen, z. B. Strom- und Leistungsüberwachung. Die Erfindung bildet einen weiteren Baustein für eine Zustandsüberwachung (engl.: Condition Monitoring) einer Applikation, insbesondere für eine vorbeugende Zustandsüberwachung.

Die Aufgabe wird ferner gelöst durch ein Motorsteuergerät, insbesondere einen Sanftstarter, zur Anlaufstrombegrenzung eines Elektromotors. Das Motorsteuergerät weist eine Erfassungseinheit auf, z. B. einen Sensor, insbesondere einen Stromsensor, zum Erfassen eines Startzeitpunkts, an dem der Elektromotor einen Anlauf beginnt und zum Erfassen eines Endzeitpunkts, an dem der Elektromotor den Anlauf abgeschlossen hat. Das Motorsteuergerät weist außerdem eine Rechen- und Steuereinheit auf, z. B. einen Mikroprozessor, zum Ermitteln einer Anlaufzeit aus dem Start- und dem Endzeitpunkt, zum Vergleichen der Anlaufzeit mit mindestens einem vorgegebenen zeitlichen Grenzwert, und zum Generieren einer Meldung in Abhängigkeit des Ergebnisses des Vergleichs. Das Motorsteuergerät weist außerdem eine Ausgabeeinheit auf, z. B. eine Geräteschnittstelle, einen Signalausgang oder ein HMI wie ein Display, zum Ausgeben der Meldung (HMI = Human Machine Interface). Die Ausgabeeinheit, mittels der die Meldung ausgegeben wird, kann im folgenden auch als Meldeeinheit bezeichnet sein.

Falls der in der Rechen- und Steuereinheit erfolgende Vergleich ergibt, dass die Anlaufzeit einen unteren Grenzwert unterschritten hat oder die Anlaufzeit einen oberen Grenzwert überschritten hat, z. B. über ein vorgegebenes Maß hinaus von einem Anlaufzeitsollwert abweicht, so generiert die Rechen- und Steuereinheit eine Meldung, durch welche ein Anwender oder Betreiber des Motorsteuergeräts über die Abweichung informiert wird, und veranlasst die Ausgabeeinheit zur Ausgabe dieser Meldung an einen Anwender oder Betreiber des Motorsteuergeräts.

Die Ausgabe der Meldung kann am Motorsteuergerät erfolgen, z. B. über ein in das Motorsteuergerät integriertes Display. In diesem Fall ist das Display die Ausgabeeinheit des Motorsteuergeräts. Die Ausgabe der Meldung kann zusätzlich oder alternativ an einem anderen Gerät als dem Motorsteuergerät erfolgen, z. B. an einem separaten Monitor, der sich beispielsweise in einer Betriebswarte des Betreibers der Applikation befindet. In diesem Fall ist ein Signalausgang bzw. eine Geräteschnittstelle / Geräte-Interface des Motorsteuergeräts die Ausgabeeinheit des Motorsteuergeräts. Es ist auch möglich, dass mittels einer App die Meldung über einen Signalausgang bzw. ein Interface des Motorsteuergeräts auf ein mobiles Gerät, z. B. ein Smartphone, des Betreibers der Applikation übertragen wird.

Das Motorsteuergerät kann ein vorzugsweise elektronisches Motorsteuergerät, insbesondere ein Sanftstarter, sein. Das Motorsteuergerät steuert das Anlaufverhalten eines angeschlossenen Elektromotors. Außer einem Anlauf, insbesondere einem Sanftanlauf, kann das Motorsteuergerät beispielsweise einen Pumpenauslauf, ein Gleichstrombremsen oder einen Energiesparbetrieb bei Teillast eines Elektromotors, insbesondere eines Asynchronmotors, steuern.

Die Aufgabe wird ferner gelöst durch ein Computerprogrammprodukt, das direkt in den internen Speicher einer digitalen Recheneinheit geladen werden kann und Softwarecodeabschnitte umfasst, mit denen die Schritte gemäß dem erfindungsgemäßen Verfahren ausgeführt werden, wenn das Produkt auf der Recheneinheit läuft. Als die digitale Recheneinheit dient vorzugsweise die Rechen- und Steuereinheit des Motorsteuergeräts. Das Computerprogrammprodukt kann als eine Firmware ausgebildet sein, welche in das Motorsteuergeräts eingebettet ist.

Das Starten eines Elektromotors, z. B. eines Drehstrommotors, mittels eines Motorsteuergeräts, insbesondere eines Sanftstarters, zur Anlaufstrombegrenzung des Elektromotors kann in verschiedenen parametrierbaren Anlaufarten erfolgen. Abhängig von der gewählten Anlaufart und abhängig von der Belastung des Motors kann der Anlauf des Motors unterschiedlich lange dauern. Falls die vom Motor angetriebene Last, z. B. ein Förderband oder ein Brecher, von der typischen Last abweicht, kann der Anlauf länger oder kürzer als mit der bisherigen Last dauern.

Bei bestimmten Applikationen ist die Einhaltung eines vorgebbaren Anlaufzeitsollwerts mit einem vorgegebenen Toleranzband wichtig. Das Toleranzband kann mittels eines oberen Grenzwerts, der als ein Prozentwert größer 100 % des Anlaufzeitsollwerts definiert ist, und mittels eines unteren Grenzwerts, der als ein Prozentwert kleiner 100 % des Anlaufzeitsollwerts definiert ist, definiert werden. Applikationsabhängig kann es notwendig sein, dass die Anlaufzeit bei jedem Anlauf oder erst nach einer bestimmten Anzahl von Anläufen innerhalb eines bestimmten zeitlichen Bereiches liegt.

Bietet das Motorsteuergerät eine Autoparametrierungsfunktion, so kann der Anwender mittels der Erfindung überwachen, ob die durch die Autoparametrierung erreichte tatsächliche Anlaufzeit innerhalb eines vorgegebenen Bereiches des gewünschten Anlaufzeitsollwertes liegt. Im Falle eines Nichterreichens von vorgegebenen Grenzwerten wird der Anwender durch eine Meldung entsprechend informiert.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Eine Stromerfassung in einem den Elektromotor mit Strom versorgenden elektrischen Leiter kann mittels eines vorzugsweise in das Motorsteuergerät integrierten Stromwandlers erfolgen.

Ein Ermitteln einer Anlaufzeit aus dem Start- und dem Endzeitpunkt des Anlaufes und ein Vergleichen der ermittelten Anlaufzeit mit mindestens einem vorgegebenen zeitlichen Grenzwert erfolgt in einer Rechen- und Steuereinheit, insbesondere einem Mikroprozessor, des Motorsteuergeräts. Dazu werden die beiden von der Erfassungseinheit erfassten Zeitpunkte, d. h. der Start- und der Endzeitpunkt des Anlaufs, als Messwerte von der Erfassungseinheit in die Rechen- und Steuereinheit übertragen. Aus den gemessenen Zeitwerten wird durch die Rechen- und Steuereinheit die Anlaufzeit berechnet, z. B. durch eine Substraktion des Startzeitpunkts vom Endzeitpunkt. Die Anlaufzeit wird danach einer Schaltungslogik zugeführt, welche die Anlaufzeit mit mindestens einem vorgegebenen zeitlichen Grenzwert vergleicht. Im Falle einer Grenzwertverletzung generiert die Rechen- und Steuereinheit eine entsprechende Meldung.

In einer vorteilhaften Ausgestaltung der Erfindung wird ein vorgegebener zeitlicher Grenzwert als ein absoluter Wert, z. B. als eine Zeitspanne von x Sekunden, vorgegeben, insbesondere von einem Anwender des Motorsteuergeräts.

In einer vorteilhaften Ausgestaltung der Erfindung wird ein vorgegebener zeitlicher Grenzwert in Bezug auf einen Anlaufzeitsollwert vorgegeben, insbesondere von einem Anwender des Motorsteuergeräts. Dabei kann ein zeitlicher Grenzwert als ein prozentualer Wert des Anlaufzeitsollwerts vorgegeben werden, z. B. ein oberer Grenzwert als ein Prozentwert größer 100% des Anlaufzeitsollwerts definiert werden und/oder ein unterer Grenzwert als ein Prozentwert kleiner 100% des Anlaufzeitsollwerts definiert werden.

In einer vorteilhaften Ausgestaltung der Erfindung weisen vorgegebene zeitliche Grenzwerte mindestens einen unteren zeitlichen Grenzwert und mindestens einen oberen zeitlichen Grenzwert auf.

In einer vorteilhaften Ausführungsform der Erfindung definieren ein unterer zeitlicher Grenzwert und ein oberer zeitlicher Grenzwert ein Toleranzband. Die Anlaufzeit wird einer Schaltungslogik des Motorstartergeräts zugeführt, welche die Anlaufzeit mit dem unteren zeitlichen Grenzwert und dem oberen zeitlichen Grenzwert vergleicht. Liegt die Anlaufzeit außerhalb des Toleranzbandes, d. h. unterhalb des unteren zeitlichen Grenzwerts oder oberhalb des oberen zeitlichen Grenzwerts, so liegt eine sogenannte Grenzwertverletzung vor. Im Falle einer Grenzwertverletzung wird eine entsprechende Meldung generiert.

Eine vorteilhafte Ausführungsform der Erfindung umfasst ein Definieren eines ersten unteren zeitlichen Grenzwertes als unterer Störgrenzwert und eines ersten oberen zeitlichen Grenzwertes als oberer Störgrenzwert; und ein Generieren und Ausgeben einer Störmeldung, falls die Anlaufzeit unterhalb des unteren Störgrenzwertes oder oberhalb des oberen Störgrenzwertes liegt.

Eine vorteilhafte Ausführungsform der Erfindung umfasst ein Definieren eines zweiten unteren zeitlichen Grenzwertes als unterer Warngrenzwert und eines zweiten oberen zeitlichen Grenzwertes als oberer Warngrenzwert; und ein Generieren und Ausgeben einer Warnmeldung, falls die Anlaufzeit unterhalb des unteren Warngrenzwertes oder oberhalb des oberen Warngrenzwertes liegt.

In einer vorteilhaften Ausführungsform der Erfindung liegt bei einer Störmeldung ein größeres Problem vor als bei einer Warnmeldung. Eine Warnmeldung warnt einen Anwender des Motorsteuergeräts, dass eine Abweichung der Anlaufzeit vorliegt, die aber noch toleriert werden kann. Eine Störmeldung dagegen informiert einen Anwender des Motorsteuergeräts, dass eine Abweichung der Anlaufzeit vorliegt, die nicht mehr toleriert werden kann; ein Eingreifen des Anwenders ist erforderlich.

Eine vorteilhafte Ausführungsform der Erfindung umfasst ein Erfassen von Startzeitpunkten von zwei oder mehr Anläufen des Elektromotors; ein Erfassen von Endzeitpunkten von zwei oder mehr Anläufen des Elektromotors; ein Ermitteln von zwei oder mehr Anlaufzeiten aus den korrespondierenden Start- und Endzeitpunkten; ein Vergleichen der Anlaufzeiten mit dem mindestens einen vorgegebenen zeitlichen Grenzwert; und ein Generieren und Ausgeben einer Meldung in Abhängigkeit des Ergebnisses des Vergleichs und in Abhängigkeit von einer Anzahl an bereits ermittelten Anlaufzeiten.

Ob eine Grenzwertverletzung sofort oder erst "verzögert", d. h. erst bei einem zweiten oder nachfolgenden Anlauf, zu einer Meldung führt, kann mit Hilfe eines Parameters "Anlaufversuche ohne Meldung", z. B. mit einem Einstellbereich 0 bis 10 und einer Schrittweite 1, vom Anwender eingestellt werden.

In einer vorteilhaften Ausführungsform der Erfindung weist das Motorsteuergerät eine Eingabeeinheit zur Eingabe des Anlaufzeitsollwerts am Motorsteuergerät auf. Die Eingabeeinheit kann beispielsweise als ein Touchscreen und/oder als Bedientasten am Motorsteuergerät, welche mit der Rechen- und Steuereinheit verbunden sind, ausgebildet sein.

In einer weiteren vorteilhaften Ausführungsform der Erfindung weist das Motorsteuergerät einen Speicher zum Speichern des Anlaufzeitsollwerts und einer letzten erreichten Anlaufzeit auf. Die Speicherung erfolgt hierbei vorzugsweise in einem flüchtigen Speicher des Motorsteuergeräts.

Die oben beschriebenen Eigenschaften, Merkmale und Vorteile dieser Erfindung sowie die Art und Weise, wie diese erreicht werden, werden klarer und deutlicher verständlich durch die folgende Beschreibung der Ausführungsbeispiele, welche anhand der Zeichnungen näher erläutert werden. Es zeigt jeweils schematisch und nicht maßstabsgetreu
- Fig. 1: einen Motorabzweig mit einem erfindungsgemäßen Motorsteuergerät;
- Fig. 2: eine weitere Ausführungsform eines erfindungsgemäßen Motorsteuergeräts;
- Fig. 3: ein t-tA-Diagramm;
- Fig. 4: ein zeitlich zu dem t-tA-Diagramm von Fig. 3 korrespondierender Verlauf von Binärwerten, welche eine Ausgabe von Meldungen steuern können; und
- Fig. 5 bis 8: verschiedene Ausgestaltungen einer Grenzwertdefinition.

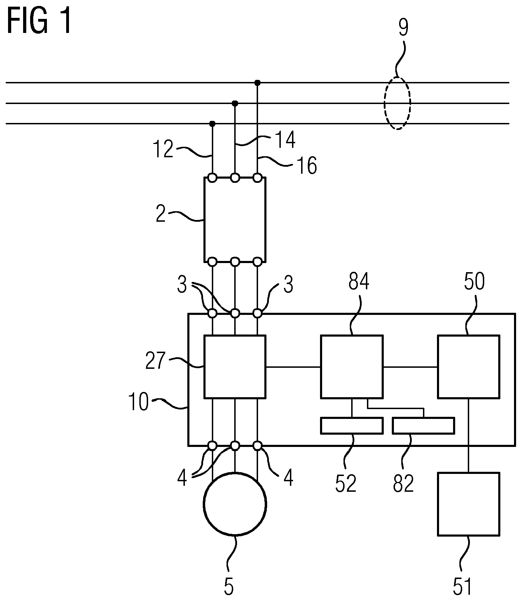

Fig. 1 stellt einen Motorabzweig dar, welcher ein über eine dreiphasige elektrische Leitung 12, 14, 16 mit einem elektrischen Versorgungsnetz 9 verbundenes Trennglied 2, ein dem Trennglied 2 nachgeschaltetes Motorsteuergerät 10 und einen dem Motorsteuergerät 10 nachgeschalteten Elektromotor 5 aufweist. Das Motorsteuergerät 10 kann als ein selbstparametrierender Drehstromsteller zum Anlauf von Elektromotoren, insbesondere von Drehstrom-Asynchronmaschinen, ausgebildet sein.

Das Trennglied 2 hat eine Trennfunktion als ein Schutz der elektrischen Leitung 12, 14, 16 gegen einen Kurzschluss sowie als ein Schutz der elektrischen Leitung 12, 14, 16 und des Elektromotors 5 gegen eine Überlast. Das Trennglied 2 kann z. B. als ein Leistungsschalter oder ein Sicherungstrenner ausgebildet sein.

Das Motorsteuergerät 10 dient der Begrenzung des Anlaufstroms des Elektromotors 5. Das Motorsteuergerät 10 kann als ein Motorstarter, insbesondere ein Sanftstarter, ausgebildet sein.

Dabei ist das Motorsteuergerät 10 mit seinen Anschlüssen in den Motorabzweig zwischen dem Trennglied 2 und dem Elektromotor 5 verschaltet.

Das Motorsteuergerät 10 weist eine Erfassungseinheit 27 zum Erfassen eines Startzeitpunkts, an dem der Elektromotor 5 einen Anlauf beginnt, und zum Erfassen eines Endzeitpunkts, an dem der Elektromotor 5 den Anlauf abgeschlossen hat, auf. Mittels einer Strommessung über einen Stromwandler im Motorsteuergerät 10 wird der Stromfluss in den elektrischen Leitungen 12, 14, 16 während des Anlaufs und Betriebs des Elektromotors 5 gemessen.

Das Motorsteuergerät 10 weist eine Rechen- und Steuereinheit 84, z. B. eine CPU (= Central Processing Unit), zum Ermitteln einer Anlaufzeit aus dem Start- und dem Endzeitpunkt, zum Vergleichen der Anlaufzeit mit mindestens einem vorgegebenen zeitlichen Grenzwert und zum Generieren einer oder mehrerer Meldungen auf.

Das Motorsteuergerät 10 weist eine Ein-/Ausgabeeinheit 52 zur Eingabe mindestens eines zeitlichen Grenzwerts durch einen Anwender des Motorsteuergeräts 10 und zur Ausgabe von Informationen an einen Anwender des Motorsteuergeräts 10 auf. Die Ein-/Ausgabeeinheit 52 kann als ein Touchscreen und/oder als ein Bildschirm mit Bedientasten am Motorsteuergerät 10 ausgebildet sein. Die Ein-/ Ausgabeeinheit 52 kann ein grafisches Display, z. B. auf der Frontseite des Motorsteuergerätes 10, aufweisen, auf dem die Funktionen und Zustände des Motorsteuergerätes 10 bei anliegender Steuerspannung und die von der Rechen- und Steuereinheit 84 erzeugten Meldungen als Klartext und/oder mit Hilfe von Symbolen angezeigt werden.

Das Motorsteuergerät 10 weist einen Speicher 82 zum Speichern des mindestens einen vorgegebenen zeitlichen Grenzwerts und einer letzten erreichten Anlaufzeit auf.

Das Motorsteuergerät 10 weist außerdem eine Ausgabeeinheit 50 in Form einer Geräteschnittstelle zum Ausgeben einer von der Rechen- und Steuereinheit 84 erzeugten Meldung auf ein externes Ausgabegerät 51 auf.

Falls die Rechen- und Steuereinheit 84 beim Vergleichen der Anlaufzeit mit mindestens einem vorgegebenen zeitlichen Grenzwert eine Grenzwertverletzung feststellt, d. h. eine Unterschreitung eines unteren Grenzwertes oder eine Überschreitung eines oberen Grenzwertes, so generiert die Rechen- und Steuereinheit 84 eine entsprechende Meldung hinsichtlich der Grenzwertverletzung.

Die Rechen- und Steuereinheit 84 übergibt die erzeugte Meldung an die Ein-/ Ausgabeeinheit 52, wo sie einem Anwender bzw. einem Betreiber des Motorsteuergeräts 10 angezeigt wird.

Zusätzlich übergibt die Rechen- und Steuereinheit 84 die erzeugte Meldung an die Geräteschnittstelle 50, von der sie auf ein anderes Gerät als das Motorsteuergerät 10, d. h. ein externes Ausgabegerät 51, übertragen und dort ausgegeben wird. Es kann sich bei dem externen Gerät 51 um einen separaten Monitor, z. B. in einer Betriebswarte des Betreibers der Applikation handeln. Es ist auch möglich, dass die erzeugte Meldung von der Geräteschnittstelle 50 mittels einer App auf ein mobiles Gerät, z. B. ein Mobiltelefon, insbesondere ein Smartphone, des Betreibers der Applikation übertragen wird.

Die Rechen- und Steuereinheit 84 kann im Falle einer Grenzwertverletzung zusätzlich ein Signal erzeugen, welches weitere Komponenten eines nicht näher dargestellten Automatisierungssystems empfangen können.

Ein Computerprogrammprodukt, mit denen die Schritte des erfindungsgemäßen Verfahrens ausgeführt werden, kann direkt in einen internen Speicher der Rechen- und Steuereinheit 84 geladen werden, der aus Gründen der Übersichtlichkeit in Fig. 1 nicht separat dargestellt ist. Das Computerprogrammprodukt umfasst Softwarecodeabschnitte, mit denen die Schritte des erfindungsgemäßen Verfahrens ausgeführt werden, wenn das Produkt auf der Rechen- und Steuereinheit 84 läuft. Anstatt einer Speicherung in einen internen Speicher der Rechen- und Steuereinheit 84 kann auch vorgesehen sein, dass das Computerprogrammprodukt, zumindest vorübergehend, in den nichtflüchtigen Speicher 82 des Motorsteuergeräts 10 geladen wird. Von dort kann es in einen flüchtigen Arbeitsspeicher der Rechen- und Steuereinheit 84 geladen werden.

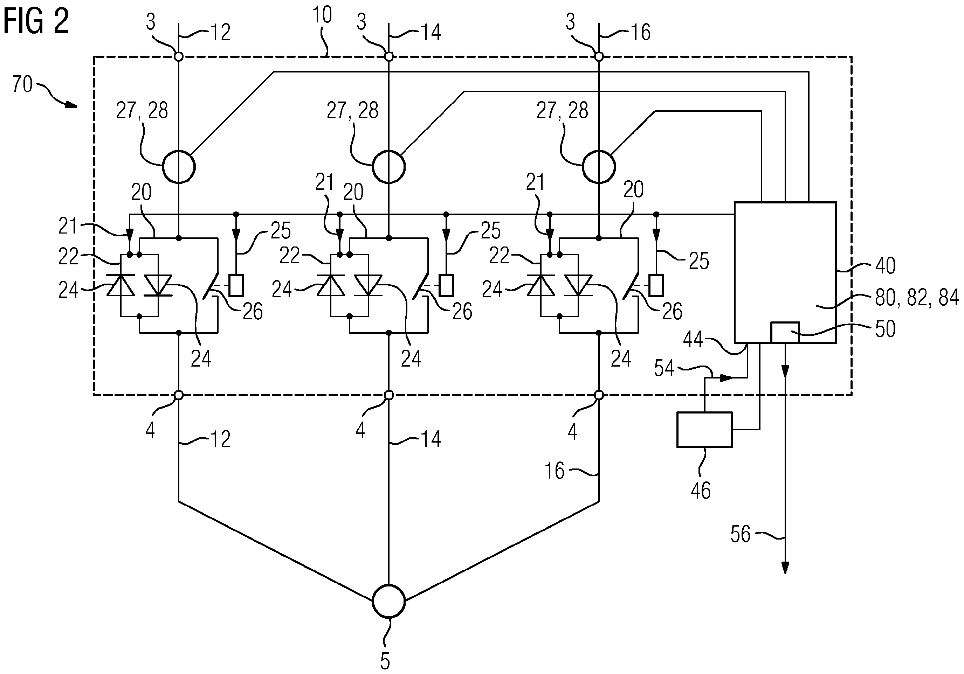

Fig. 2 zeigt eine weitere Ausführungsform eines erfindungsgemäßen Motorsteuergeräts 10. Das Motorsteuergerät 10 ist mit seinen drei eingangsseitigen Anschlussstellen 3 an drei Hauptstrombahnen 12, 14, 16 eines dreiphasigen Versorgungsnetzes 9 und mit seinen drei ausgangsseitigen Anschlussstellen 4 mit einem dreiphasigen Stromversorgungsanschluss eines Elektromotors 5 verbunden. Der Elektromotor 5 ist ein Asynchronmotor. Das Versorgungsnetz 9 ist ein Dreiphasenwechselstromnetz einer industriellen Niederspannungsschaltanlage. Das Motorsteuergerät 10 ist ein Sanftstarter, mittels welchem die Energiezufuhr des nachgeschalteten Elektromotors 5 gesteuert werden kann.

Der Sanftstarter 10 ist an drei Hauptstrombahnen 12, 14, 16 einer dreiphasigen Stromversorgung eines Elektromotors 5 angeschlossen. Im Sanftstarter 10 ist jeder der Hauptstrombahnen 12, 14, 16 eine Bypass-Schaltung 20 zugeordnet, die jeweils einen Halbleiterschalter 22 und einen elektromechanischen Schalter 26 umfasst. Der Halbleiterschalter 22 ist als ein antiparallel angeordnetes Paar von Thyristoren 24 ausgebildet. Die elektromechanischen Schalter 26 sind als Relais ausgebildet. Jeder der Halbleiterschalter 22 und der elektromechanischen Schalter 26 ist mit einer Steuereinheit 40 verbunden, die den Sanftstarter 10 im Betrieb steuert. Die Steuereinheit 40 ist dazu ausgebildet, Zündbefehle 21 an die Halbleiterschalter 22 und Betätigungsbefehle 25 an die elektromechanischen Schalter 26 zu senden. Die Zündbefehle 21 und die Betätigungsbefehle 25 werden die Halbleiterschalter 22 und die elektromechanischen Schalter 26 jeweils geöffnet und geschlossen. Die elektromechanischen Schalter 26 sind im Dauerbetrieb des Elektromotors 5 geschlossen und die Halbleiterschalter 22 geöffnet. Die Halbleiterschalter 22 dienen dazu, eine definierte Anlaufsequenz und Auslaufsequenz des Elektromotors 5 zu steuern. In der Steuereinheit 40 ist ein Programm 80 in einem Speicher 82 gespeichert und über eine Rechen- und Steuereinheit 84 ausführbar. Das Programm 80 ist unter anderem dazu ausgebildet, mittels der Halbleiterschalter 22 eine Phasenanschnittsteuerung bzw. eine Phasenabschnittsteuerung zu verwirklichen.

Ferner ist jeder Hauptstrombahn 12, 14, 16 eine als Messwandler 28 ausgebildete Erfassungseinheit 27 zugeordnet, die dazu ausgebildet ist, einen Stromfluss in einer der Hauptstrombahnen 12, 14, 16 zu erfassen, d. h. zu messen. Jede der Erfassungseinheiten 27 ist über einen Messsignaleingang 41 mit der Steuereinheit 40 gekoppelt. Das Programm 80 in der Steuereinheit 40 ist dazu ausgebildet, eine von den Erfassungseinheiten 27 erfasste Betriebsgröße, also unter anderem den Stromfluss in den Hauptstrombahnen 12, 14, 16, zu empfangen und auszuwerten.

Darüber hinaus ist die Steuereinheit 40 mit einem Steuersignaleingang 44 versehen, über den Betriebssteuersignale 54 empfangen werden. Die Betriebssteuersignale 54 werden von einem Betriebssteuermittel 46 erzeugt, das sich außerhalb des Sanftstarters 10 befindet. Über die Betriebssteuersignale 54 wird der Elektromotor 18 im Rahmen eines geplanten Betriebsablaufs, beispielsweise eines Programmablaufs oder eines willentlichen Benutzereingriffs, gesteuert. Über den Steuersignaleingang 44 kann dem Motorsteuergerät 10 ein Anlaufsollwert übergeben werden.

Mittels der Rechen- und Steuereinheit 84 ist im Falle einer Grenzwertverletzung eine Meldung 56 erzeugbar. Die Meldung 56 wird über eine Ausgabeeinheit 50, z. B. eine Geräteschnittstelle, nach außen gesendet, wo die Meldung mittels eines Ausgabegeräts 51 an einen Anwender bzw. Betreiber ausgegeben werden kann.

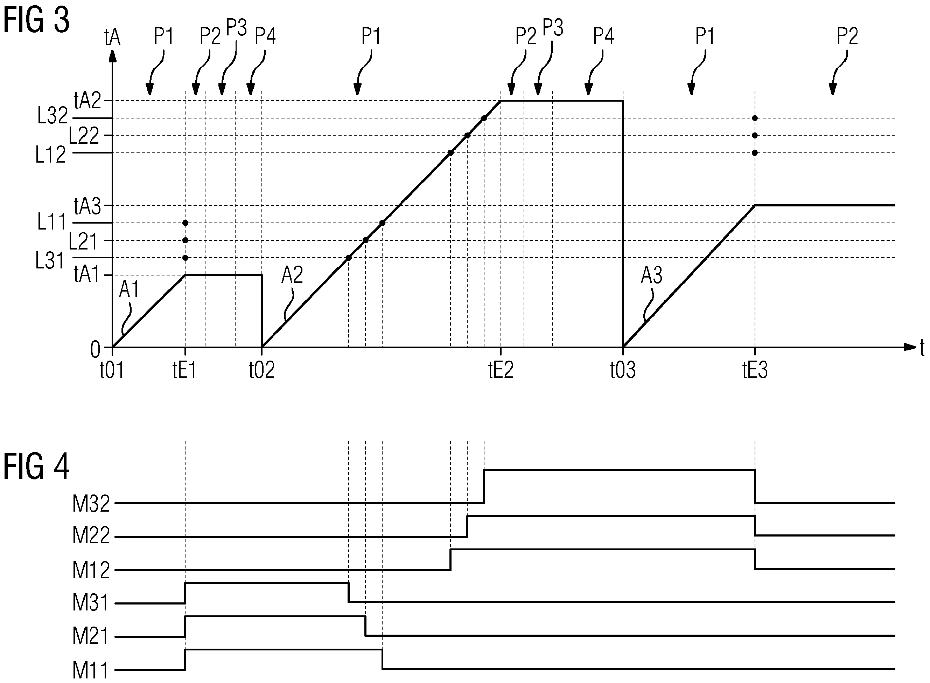

Fig. 3 zeigt ein t-tA-Diagramm, in dem die Anlaufzeit tA von drei nacheinander durchgeführten Anläufen A1, A2, A3 eines Elektromotors 5 über der Zeit t aufgetragen ist. Auf der y-Achse, an der die Anlaufzeit tA aufgetragen wird, sind in Richtung der y-Achse folgende sechs Grenzwerte in folgender Reihenfolge aufgetragen: Störgrenzwert unten L31, Warngrenzwert unten L21, Vorwarngrenzwert unten L11, Vorwarngrenzwert oben L12, Warngrenzwert oben L22, Störgrenzwert oben L32. Diese Grenzwerte werden durch einen Betreiber des Motorsteuergeräts 10, durch Eingabe der Grenzwerte in eine Ein-/Ausgabeeinheit des Motorsteuergerätes, definiert. Dabei ist der Wertebereich, in dem die Anlaufzeit tA liegen soll, das Band zwischen einem unteren Grenzwert L11, L21, L31 und einem korrespondierenden oberen Grenzwert L12, L22, L32. Dabei definieren jeweils ein unterer Grenzwert L11, L21, L31 und ein korrespondierender oberer Grenzwert L12, L22, L32 ein Toleranzband.

Der untere Vorwarngrenzwert L11 und der korrespondierende obere Vorwarngrenzwert L12 legen ein Vorwarn-Toleranzband L11, L12 der Anlaufzeit tA fest; falls die Anlaufzeit tA eines Anlaufs außerhalb des Vorwarn-Toleranzbands L11, L12 liegt, wird eine Meldung M11 "Vorwarngrenzwert unterschritten" bzw. Meldung M12 "Vorwarngrenzwert überschritten" erzeugt, wie in Fig. 4 dargestellt ist.

Der untere Warngrenzwert L21 und der korrespondierende obere Warngrenzwert L22 legen ein Warn-Toleranzband L21, L22 der Anlaufzeit tA fest; falls die Anlaufzeit tA eines Anlaufs außerhalb des Vorwarn-Toleranzbands L21, L22 liegt, wird eine Meldung M21 "Warngrenzwert unterschritten" bzw. Meldung M22 "Warngrenzwert überschritten" erzeugt, wie in Fig. 4 dargestellt ist.

Der untere Störgrenzwert L31 und der korrespondierende obere Störgrenzwert L32 legen ein Warn-Toleranzband L31, L32 der Anlaufzeit tA fest; falls die Anlaufzeit tA eines Anlaufs außerhalb des Vorwarn-Toleranzbands L31, L32 liegt, wird eine Meldung M31 "Störgrenzwert unterschritten" bzw. Meldung M32 "Störgrenzwert überschritten" erzeugt, wie in Fig. 4 dargestellt ist.

Nach einem Anlauf des Elektromotors 5 in einer Zeitphase Anlauf P1 folgt in der Regel eine Zeitphase Betrieb P2, während der der Elektromotor 5 im Betrieb ist, eine Zeitphase Auslauf P3, während der der Elektromotor 5 ausläuft bzw. abbremst, und eine Zeitphase Aus P4, während der der Elektromotor 5 im Stillstand ist.

Das Motorsteuergerät 10 unterstützt also eine sogenannte Anlaufzeitüberwachungsfunktion: der Anwender kann die gemessene Anlaufzeit auf drei Grenzwerte L12, L22, L32 hinsichtlich Überschreitung und auf drei Grenzwerte L11, L21, L31 hinsichtlich Unterschreitung überwachen lassen.

In Abhängigkeit des über-/unterschrittenen Grenzwertes wird eine Vorwarnung, eine Warnung oder ein Fehler gemeldet. Die Anlaufzeitüberwachungsfunktion wirkt vom Beginn t01, t02, t03 bis zum Ende tE1, tE2, tE3 der Anlaufphase des Elektromotors 5. Zusätzlich kann der Anwender mit Hilfe eines Parameters festlegen, nach wie vielen aufeinanderfolgenden Anläufen ein Grenzwert eingehalten werden muss, bevor eine Meldung wegen einer Grenzwertverletzung erfolgt.

### Erster Anlauf A1

Das t-tA-Diagramm zeigt, dass ein erster Anlauf A1 zum Startzeitpunkt t01 bei einer Drehzahl des Elektromotors 5 von 0 U/min beginnt und nach Erreichen einer Nenndrehzahl des Elektromotors 5 zum Endzeitpunkt tE1 endet. Ein Vergleich der sich aus der Differenz von Endzeitpunkt tE1 und Startzeitpunkt t01 ergebenden ersten Anlaufzeit tA1 mit den vorgegebenen Grenzwerten ergibt, dass die erste Anlaufzeit tA1 unterhalb des unteren Störgrenzwerts L31, des unteren Warngrenzwerts L21 und des unteren Vorwarngrenzwerts L11 liegt. Aus diesem Grund werden, sobald der erste Anlauf A1 beendet und die erste Anlaufzeit tA1 feststeht, d. h. berechnet ist, die Meldungen M11 "Vorwarngrenzwert unterschritten", M21 "Warngrenzwert unterschritten" und M31 "Störgrenzwert unterschritten" ausgegeben. Dies ist in Fig. 4 durch die Änderung der Werte M11, M21 und M31 von 0 auf 1 im Endzeitpunkt tE1 dargestellt. Theoretisch fallen der Endzeitpunkt tE1 und der Zeitpunkt der Meldungen M11, M21, M31 nicht zusammen. In der Darstellung des t-tA-Diagramms in Fig. 3 wurde der für die Berechnung benötigte Zeitraum nach dem Endzeitpunkt tE1 bis zur Ausgabe der Meldungen vernachlässigt, da er durch die elektronisch erfolgende Berechnung der Anlaufzeit tA relativ kurz ist.

Nach der Zeitphase Anlauf P1 folgen die Zeitphasen Betrieb P2, Auslauf P3 und Aus P4, während dessen die erste Anlaufzeit tA1 auf dem ermittelten Wert bleibt; der Wert der Anlaufzeit tA wird erst wieder auf Null gesetzt, wenn ein neuer Anlauf beginnt. Auch die Werte der Meldungen M11, M21 und M31 bleiben auf 1 stehen.

### Zweiter Anlauf A2

Das t-tA-Diagramm zeigt, dass ein zweiter Anlauf A2 zum Startzeitpunkt t02 bei einer Drehzahl des Elektromotors 5 von 0 U/min beginnt und nach Erreichen einer Nenndrehzahl des Elektromotors 5 zum Endzeitpunkt tE2 endet. Da vor dem zweiten Anlaufs A2 die Parameter des Motorstarters 10 gegenüber denen beim ersten Anlauf A1 verändert wurden, ist die zweite Anlaufzeit tA2 länger als die erste Anlaufzeit tA1. Ein Vergleich der sich aus der Differenz von Endzeitpunkt tE2 und Startzeitpunkt t02 ergebenden zweiten Anlaufzeit tA2 mit den vorgegebenen Grenzwerten ergibt, dass die zweite Anlaufzeit tA2 oberhalb des unteren Störgrenzwerts L31, des unteren Warngrenzwerts L21 und des unteren Vorwarngrenzwerts L11 liegt. Aus diesem Grund werden die Meldungen M11 "Vorwarngrenzwert unterschritten", M21 "Warngrenzwert unterschritten" und M31 "Störgrenzwert unterschritten" wieder auf Null gesetzt, sobald die Kurve A2, welche die Anlaufzeit tA2 hochzählt, diese Grenzwerte erreicht. Dies ist in Fig. 4 durch die Änderung der Werte M31, M21 und M11 nacheinander von 1 auf 0 dargestellt.

Die sich aus der Differenz von Endzeitpunkt tE2 und Startzeitpunkt t02 ergebende zweite Anlaufzeit tA2 liegt außerdem oberhalb des oberen Störgrenzwerts L32, des oberen Warngrenzwerts L22 und des oberen Vorwarngrenzwerts L12. Aus diesem Grund werden die Meldungen M12 "Vorwarngrenzwert überschritten", M22 "Warngrenzwert überschritten" und M32 "Störgrenzwert überschritten" ausgegeben, sobald die Kurve A2, welche die Anlaufzeit tA2 hochzählt, diese Grenzwerte erreicht. Dies ist in Fig. 4 durch die Änderung der Werte M12, M22 und M32 nacheinander von 0 auf 1 dargestellt.

Nach der Zeitphase Anlauf P1 folgen die Zeitphasen Betrieb P2, Auslauf P3 und Aus P4, während derer die zweite Anlaufzeit tA2 auf dem ermittelten Wert bleibt; der Wert der Anlaufzeit tA wird erst wieder auf Null gesetzt, wenn ein neuer Anlauf beginnt. Auch die Werte der Meldungen M12, M22 und M32 bleiben auf 1 stehen.

### Dritter Anlauf A3

Das t-tA-Diagramm zeigt, dass ein dritter Anlauf A3 zum Startzeitpunkt t03 bei einer Drehzahl des Elektromotors 5 von 0 U/min beginnt und nach Erreichen einer Nenndrehzahl des Elektromotors 5 zum Endzeitpunkt tE3 endet. Da vor dem dritten Anlaufs A2 die Parameter des Motorsteuergeräts 10 gegenüber denen beim ersten Anlauf A1 und beim zweiten Anlauf A2 verändert wurden, z. B. durch eine automatische Autoparametrierungsfunktion des Motorsteuergeräts 10 oder manuell durch einen Anwender des Motorsteuergeräts 10, ist die dritte Anlaufzeit tA3 länger als die erste Anlaufzeit tA1, aber kürzer als die zweite Anlaufzeit tA2. Ein Vergleich der sich aus der Differenz von Endzeitpunkt tE3 und Startzeitpunkt t03 ergebenden dritten Anlaufzeit tA3 mit den vorgegebenen Grenzwerten ergibt, dass die dritte Anlaufzeit tA3 oberhalb des unteren Störgrenzwerts L31, des unteren Warngrenzwerts L21 und des unteren Vorwarngrenzwerts L11 liegt. Aus diesem Grund wird keine der Meldungen M11 "Vorwarngrenzwert unterschritten", M21 "Warngrenzwert unterschritten" und M31 "Störgrenzwert unterschritten" ausgegeben. Dies ist in Fig. 4 durch das unveränderte Verbleiben der Werte M31, M21 und M11 auf 0 dargestellt.

Die sich aus der Differenz von Endzeitpunkt tE3 und Startzeitpunkt t03 ergebende dritte Anlaufzeit tA3 liegt außerdem unterhalb des oberen Störgrenzwerts L32, des oberen Warngrenzwerts L22 und des oberen Vorwarngrenzwerts L12. Aus diesem Grund werden die Meldungen M12 "Vorwarngrenzwert überschritten", M22 "Warngrenzwert überschritten" und M32 "Störgrenzwert überschritten" wieder auf Null gesetzt, sobald die Kurve A3, welche die Anlaufzeit tA3 hochzählt, diese Grenzwerte erreicht. Dies ist in Fig. 4 durch die Änderung der Werte M12, M22 und M32 von 1 auf 0 im Endzeitpunkt tE3 dargestellt. Theoretisch fallen der Endzeitpunkt tE3 und der Zeitpunkt der Meldungen M12, M22, M32 nicht zusammen. In der Darstellung des Diagramms in Fig. 3 wurde der für die Berechnung benötigte Zeitraum nach dem Endzeitpunkt tE3 bis zur Ausgabe der Meldungen vernachlässigt, da er durch die elektronisch erfolgende Berechnung der Anlaufzeit tA relativ kurz ist.

Nach der Zeitphase Anlauf P1 verbleibt der Elektromotor in der Zeitphase Betrieb P2, da die dritte Anlaufzeit tA3 im engsten vorgegebenen Werteband zwischen den Vorwarngrenzwerten L11 und L12 liegt.

Sowohl die Startzeitpunkte t01, t02, t03 als auch die Endzeitpunkte tE1, tE2, tE3 werden durch eine Erfassungseinheit 27 des Motorsteuergeräts 10 erfasst und an eine Rechen- und Steuereinheit 84 des Motorsteuergeräts 10 übertragen. Die sich aus der Differenz von Endzeitpunkten tE1, tE2, tE3 und Startzeitpunkten t01, t02, t03 ergebenden Anlaufzeiten tA1, tA2, tA3 wird in der Rechen- und Steuereinheit 84 berechnet. Die Anlaufzeiten tA1, tA2, tA3 werden in der Rechen- und Steuereinheit 84 mit den vom Betreiber des Motorsteuergeräts 10 vorgegebenen Grenzwerten L11, L21, L31, L12, L22, L32 verglichen. In Abhängigkeit des Ergebnisses des Vergleichs setzt die Rechen- und Steuereinheit 84 des Motorsteuergeräts 10 die Parameter M11, M21, M31, M12, M22, M32 auf 0 oder 1; entsprechend den Werten in den Parametern M11, M21, M31, M12, M22, M32 wird die Rechen- und Steuereinheit 84 des Motorsteuergeräts 10 eine Meldung generieren oder es unterlassen. Eine von der Rechen- und Steuereinheit 84 generierte Meldung kann auf einem Ausgabegerät 51, z. B. einer HMI oder einem Bildschirm, zur Information eines Betreibers des Motorsteuergeräts 10 ausgegeben werden oder zu einer Steuerung (SPS) oder einem Automatisierungssystem übertragen werden.

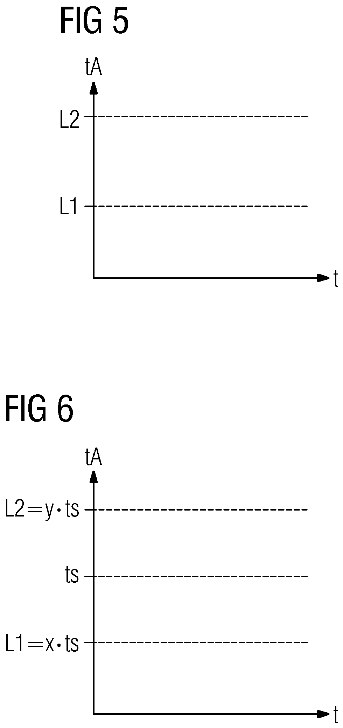

Fig. 5 bis 8 zeigen jeweils ein t-tA-Diagramm, entsprechend dem in Fig. 3 dargestellten t-tA-Diagramm.

Fig. 5 zeigt einen Fall, in dem ein unterer Grenzwert L1 und ein oberer Grenzwert L2 als absolute Zeitwerte vorgegeben sind. Beispielsweise wurde von einem Anwender des Motorsteuergeräts der untere Grenzwert L1 als 8 Sekunden und der obere Grenzwert als 12 Sekunden definiert. Falls die im Motorsteuergerät ermittelte Anlaufzeit tA weniger als 8 Sekunden beträgt, d. h. unterhalb des unteren Grenzwerts L1 von 8 Sekunden liegt, gibt das Motorsteuergerät 10 eine entsprechende Meldung aus. Falls die im Motorsteuergerät ermittelte Anlaufzeit tA mehr als 12 Sekunden beträgt, d. h. oberhalb des oberen Grenzwerts L2 von 12 Sekunden liegt, gibt das Motorsteuergerät 10 eine entsprechende Meldung aus.

Fig. 6 zeigt einen Fall, in dem von einem Anwender des Motorsteuergeräts ein unterer Grenzwert L1 und ein oberer Grenzwert L2 als prozentuale Werte eines vorgegebenen Anlaufzeitsollwerts tS vorgegeben wurden. Beispielsweise wurde der Anlaufzeitsollwert tS als 10 Sekunden, der untere Grenzwert L1 als 80 % des Anlaufzeitsollwerts tS, d. h. L1 = 0,8 tS, und der obere Grenzwert L2 als 120 % des Anlaufzeitsollwerts tS, d. h. L2 = 1,2 tS, definiert. Die in Fig. 6 angegebenen Parameter x und y betragen also x = 0,8 und y = 1,2. Falls die im Motorsteuergerät ermittelte Anlaufzeit tA weniger als 0,8 tS beträgt, d. h. unterhalb des unteren Grenzwerts L1 von 0,8 tS liegt, gibt das Motorsteuergerät 10 eine entsprechende Meldung aus. Falls die im Motorsteuergerät ermittelte Anlaufzeit tA mehr als 1,2 tS Sekunden beträgt, d. h. oberhalb des oberen Grenzwerts L2 von 1,2 tS liegt, gibt das Motorsteuergerät 10 eine entsprechende Meldung aus.

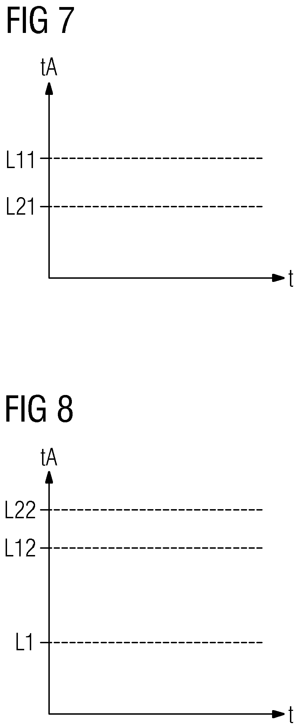

Fig. 7 zeigt einen Fall, in dem ein erster unterer Grenzwert L11 und ein zweiter unterer Grenzwert L21, der bei einem kleineren tA-Wert als der erste untere Grenzwert L11 liegt, vorgegeben sind. Beim Unterschreiten des ersten unteren Grenzwerts L11 wird eine Warnmeldung erzeugt und ausgegeben. Beim Unterschreiten des zweiten unteren Grenzwerts L21 wird eine Warnmeldung erzeugt und ausgegeben.

Fig. 8 zeigt einen Fall, in dem ein einziger unterer Grenzwert L1, ein erster oberer Grenzwert L12 und ein zweiter oberer Grenzwert L22, der bei einem größeren tA-Wert als der erste obere Grenzwert L11 liegt, vorgegeben sind. Der einzige untere Grenzwert L1 liegt bei einem kleineren tA-Wert als jeder der beiden oberen Grenzwerte L12, L22. Beim Unterschreiten des einzigen unteren Grenzwerts L1 wird eine Meldung erzeugt und ausgegeben. Beim Überschreiten des ersten oberen Grenzwerts L12 wird eine Warnmeldung erzeugt und ausgegeben. Beim Überschreiten des zweiten oberen Grenzwerts L22 wird eine Störmeldung erzeugt und ausgegeben.

## Patentansprüche

1. Verfahren zur Überwachung einer Anlaufzeit (tA) eines Elektromotors (5) durch ein dem Elektromotor (5) vorgeschaltetes Motorsteuergerät (10), umfassend folgende Schritte:
- Erfassen eines Startzeitpunkts (t01, t02, t03), an dem der Elektromotor einen Anlauf (A1, A2, A3) beginnt;
- Erfassen eines Endzeitpunkts (tEl, tE2, tE3), an dem der Elektromotor den Anlauf (A1, A2, A3) abgeschlossen hat;
- Ermitteln einer Anlaufzeit (tA, tA1, tA2, tA3) aus dem Startzeitpunkt (t01, t02, t03) und dem Endzeitpunkt (tEl, tE2, tE3); und
- Vergleichen der Anlaufzeit (tA, tA1, tA2, tA3) mit mindestens einem vorgegebenen zeitlichen Grenzwert (L1, L2, L11, L21, L31, L12, L22, L32);
**gekennzeichnet durch** folgenden weiteren Schritt:
- Generieren und Ausgeben einer Meldung (56) in Abhängigkeit des Ergebnisses des Vergleichs.

2. Verfahren nach Anspruch 1, wobei ein vorgegebener zeitlicher Grenzwert (L1, L2, L11, L21, L31, L12, L22, L32) als ein absoluter Wert vorgegeben wird.

3. Verfahren nach einem der vorhergehenden Ansprüche, wobei ein vorgegebener zeitlicher Grenzwert (L1, L2, L11, L21, L31, L12, L22, L32) in Bezug auf einen Anlaufzeitsollwert (tS), insbesondere als ein prozentualer Wert des Anlaufzeitsollwerts (tS), vorgegeben wird.

4. Verfahren nach einem der vorhergehenden Ansprüche, wobei eine Meldung (56) generiert und ausgegeben wird, falls die Anlaufzeit (tA, tA1, tA2, tA3) einen vorgegebenen oberen zeitlichen Grenzwert (L1, L2, L11, L21, L31, L12, L22, L32) überschreitet oder einen vorgegebenen unteren zeitlichen Grenzwert (L1, L2, L11, L21, L31, L12, L22, L32) unterschreitet.

5. Verfahren nach einem der vorhergehenden Ansprüche, wobei vorgegebene zeitliche Grenzwerte (L1, L2, L11, L21, L31, L12, L22, L32) mindestens einen unteren zeitlichen Grenzwert (L1, L11, L21, L31) und mindestens einen oberen zeitlichen Grenzwert (L2, L12, L22, L32) aufweisen.

6. Verfahren nach Anspruch 5, umfassend:
- Definieren eines ersten unteren zeitlichen Grenzwertes (L1) als unterer Störgrenzwert (L31) und eines ersten oberen zeitlichen Grenzwertes (L2) als oberer Störgrenzwert (L32); und
- Generieren und Ausgeben einer Störmeldung (M31, M32), falls die Anlaufzeit (tA) unterhalb des unteren Störgrenzwertes (L31) oder oberhalb des oberen Störgrenzwertes (L32) liegt.

7. Verfahren nach Anspruch 5 oder 6, umfassend:
- Definieren eines zweiten unteren zeitlichen Grenzwertes (L1) als unterer Warngrenzwert (L21) und eines zweiten oberen zeitlichen Grenzwertes (L2) als oberer Warngrenzwert (L22); und
- Generieren und Ausgeben einer Warnmeldung (M21, M22), falls die Anlaufzeit (tA) unterhalb des unteren Warngrenzwertes (L21) oder oberhalb des oberen Warngrenzwertes (L22) liegt.

8. Verfahren nach einem der vorhergehenden Ansprüche, umfassend:
- Erfassen von Startzeitpunkten (t01, t02, t03) von zwei oder mehr Anläufen (A1, A2, A3) des Elektromotors (5);
- Erfassen von Endzeitpunkten (tEl, tE2, tE3) von zwei oder mehr Anläufen (A1, A2, A3) des Elektromotors (5);
- Ermitteln von zwei oder mehr Anlaufzeiten (tA1, tA2, tA3) aus den korrespondierenden Start- und Endzeitpunkten (t01, t02, t03; tE1, tE2, tE3);
- Vergleichen der Anlaufzeiten (tA1, tA2, tA3) mit dem mindestens einen vorgegebenen zeitlichen Grenzwert (L1, L2, L11, L21, L31, L12, L22, L32); und
- Generieren und Ausgeben einer Meldung (M11, M21, M31, M12, M22, M32) in Abhängigkeit des Ergebnisses des Vergleichs und in Abhängigkeit von einer Anzahl an bereits ermittelten Anlaufzeiten (tA1, tA2, tA3).

9. Motorsteuergerät (10) zur Ansteuerung eines Elektromotors (5), insbesondere Sanftstarter, aufweisend
- eine Erfassungseinheit (27) zum Erfassen eines Startzeitpunkts (t01), an dem der Elektromotor (5) einen Anlauf beginnt und zum Erfassen eines Endzeitpunkts (tE1), an dem der Elektromotor (5) den Anlauf abgeschlossen hat;
- eine Rechen- und Steuereinheit (84) zum Ermitteln einer Anlaufzeit (tA) aus dem Startzeitpunkt (t01) und dem Endzeitpunkt (tE1), zum Vergleichen der Anlaufzeit (tA) mit mindestens einem vorgegebenen zeitlichen Grenzwert (L1, L2, L11, L21, L31, L12, L22, L32) und zum Generieren einer Meldung (56) in Abhängigkeit des Ergebnisses des Vergleichs, und
- eine Ausgabeeinheit (50, 52) zum Ausgeben der Meldung (56).

10. Computerprogrammprodukt, das direkt in den internen Speicher einer digitalen Recheneinheit (84) geladen werden kann und Softwarecodeabschnitte umfasst, mit denen die Schritte gemäß einem der Ansprüche 1 bis 8 ausgeführt werden, wenn das Produkt auf der Recheneinheit (84) läuft.
